# FASCICULE DE BREVET EUROPEEN

(11) **EP 1 893 440 B1**
(45) Date de publication et mention de la délivrance du brevet: **04.11.2009**
(21) Numéro de dépôt: 06794457.9
(22) Date de dépôt: 24.05.2006
(51) Int. Cl.: B60N 3/02, B60R 21/20

(54) **DISPOSITIF DE FIXATION D'UNE POIGNEE DE VIRAGE POUR VEHICULE AUTOMOBILE**
VORRICHTUNG ZUR BEFESTIGUNG EINES GEKRÜMMTEN GRIFFS FÜR EIN KRAFTFAHRZEUG
DEVICE FOR FIXING A CORNER-TURNING HANDLE FOR MOTOR VEHICLE

(30) Priorité: 15.06.2005 FR 0551625
(43) Date de publication de la demande: 05.03.2008
(73) Titulaire: Renault s.a.s., 92100 Boulogne-Billancourt (FR)
(72) Inventeur: JAMOIS, Jean Marc, F-95870 Bezons (FR); BARBOT, Jean Claude, F-95510 Vetheuil (FR)
(74) Mandataire: Guyon, Rodolphe C.
(86) Numéro de dépôt international: PCT/FR2006/050477
(87) Numéro de publication internationale: WO 2007/003821

(56) Documents cités:
- EP-A- 1 241 059
- WO-A-99/51457
- DE-A1- 19 841 340
- DE-U1- 20 209 141
- FR-A- 2 784 647

## Description

La présente invention concerne un dispositif de fixation d'une poignée de virage pour véhicule automobile. Elle concerne plus particulièrement un dispositif de fixation d'une poignée de virage dans lequel une poignée de virage est fixée par au moins un point d'attache à un élément de structure du véhicule.

Classiquement, les poignées de virage sont fixées au niveau de deux emboutis, ces emboutis étant réalisés dans un élément de structure du véhicule, à savoir dans la doublure de montant de baie pour l'avant du véhicule et sur le brancard pour l'arrière de la voiture.

Une telle conception ne permet pas de garder une régularité des volumes, ni de garder des lignes de carre constante au niveau de l'élément de structure, ce qui présente l'inconvénient d'une moins bonne tenue aux chocs de la voiture.

Il est connu dans ces zones des véhiculés de disposer des coussins gonflables latéraux. Ces coussins sont positionnés de sorte qu'ils se déploient entre chaque passager et l'ouvrant latéral le plus proche pour prévenir, en cas de choc, un impact du passager contre les portes ou les vitres. Il est alors important que le coussin s'expanse dans la direction souhaitée pour que son absorption d'énergie soit optimale. Le fait de diriger l'expansion du coussin permet également d'éviter le contact du coussin avec les poignées de virage, ce qui aurait pour effet d'éjecter cette poignée.

Un dispositif de fixation d'une poignée de virage pour véhicule automobile selon le préambule de la revendication 1 est connu du document DE-A-198 41 340.

La présente invention vise à proposer un dispositif de fixation de poignée de virage qui assure la tenue de cette poignée, qui conserve l'intégrité structurelle des éléments de structure du véhicule, et qui permette de prendre en compte l'expansion d'un coussin gonflable de sécurité latéral.

Pour répondre à ces objectifs, l'invention propose un dispositif de fixation d'une poignée de virage tel que décrit précédemment, qui comprend une pièce de support fixée sur cet élément de structure, une extrémité de cette pièce de support forme un moyen déflecteur, caractérisé en ce que sur ladite pièce support est formée au moins une déformation locale apte à permettre la fixation de la poignée de virage.

Selon différentes caractéristiques de la présente invention faisant l'objet des revendications dépendantes :
- la pièce unique comprend une partie de fixation sensiblement verticale sur laquelle sont formées les deux déformations locales, le moyen déflecteur prolongeant l'extrémité inférieure de la partie de fixation.
- le moyen déflecteur est formé d'une partie intermédiaire sensiblement horizontale qui prolonge sensiblement perpendiculairement l'extrémité inférieure de la partie de fixation.
- le moyen déflecteur est formé en outre d'une partie de déflection qui prolonge la partie intermédiaire à l'opposé de la partie de fixation.
- la partie de déflection forme avec la partie intermédiaire un angle compris entre 90° et 135°.
- les dimensions du moyen déflecteur permettent le logement d'un coussin gonflable de sécurité monté sur l'élément de structure.

L'invention porte également sur un véhicule automobile comportant un dispositif de fixation de poignée de virage tel que décrit ci-dessus, et dans lequel l'élément de structure sur lequel est monté le dispositif de fixation est soit une doublure de montant de baie disposée sensiblement au dessus des places avant du véhicule, soit un brancard disposé sensiblement au dessus des places arrière du véhicule.

D'autres caractéristiques et avantages de l'invention apparaîtront à la lecture de la description détaillée qui suit pour la compréhension de laquelle on se reportera aux dessins annexés dans lesquels :
- la figure 1 est une représentation schématique du dispositif de fixation selon l'invention ;
- la figure 2 est une section du dispositif représenté à la figure 1, d'un coussin gonflable de sécurité, et de l'élément de structure associé ;
- la figure 3 est une représentation schématique du dispositif de fixation selon un mode de réalisation particulier de l'invention.

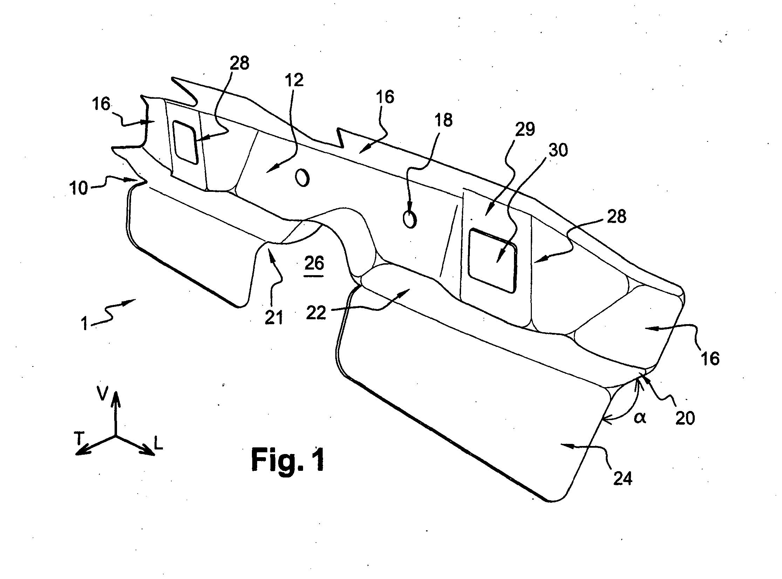

Dans la description qui va suivre, on adoptera à titre non limitatif une orientation longitudinale, verticale et transversale selon l'orientation traditionnellement utilisée dans l'automobile et indiquée par le trièdre L, V, T de la figure 1.

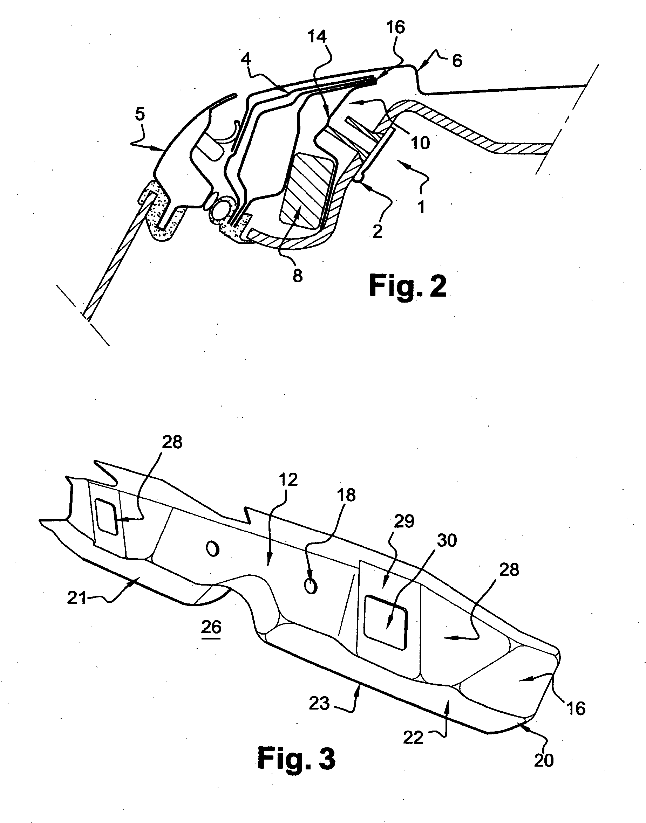

Tel que représenté à titre d'exemple sur les figures 1 et 2, un dispositif de fixation 1 de poignée de virage 2 comprend une pièce de support 10 fixée sur un élément de structure latéral du véhicule 4, en particulier sur l'un des montants longitudinaux qui supportent le pavillon 6 du véhicule. Ce dispositif 1 peut indifféremment être implanté au dessus d'une place arrière du véhicule, sur un brancard de pavillon, ou au dessus d'une place avant, sur une doublure de montant de baie.

La pièce de support 10 est formée d'au moins une partie de fixation 12 qui comporte une paroi sensiblement verticale apte à être fixée sur l'élément de structure 4 correspondant. Une première face extérieure 14 de cette paroi est amenée au contact de l'élément de structure 4 et des feuillures 16 de formes complémentaires à l'élément de structure 4 peuvent être prévues sur le pourtour de la partie de fixation 12 pour permettre le soudage de la pièce de support 10 sur l'élément de structure 4. Il peut être prévu des trous de fixation 18 sur la partie de fixation 12 pour permettre la réalisation du rivetage, du vissage ou des points de soudure pour solidariser la pièce de support 10. L'extrémité inférieure 20 de cette partie de fixation 12 est prolongé sensiblement perpendiculairement par une partie intermédiaire 22 qui s'étend horizontalement selon une direction opposée à la première face extérieure 14 de la paroi formant la partie de fixation 12. La partie intermédiaire 22 est prolongée à l'opposé de la partie de fixation 12 par une partie de déflection 24, qui forme avec la partie intermédiaire 22 un angle déterminé apte à orienter l'expansion d'un coussin gonflable 8 logé entre l'élément de structure 4 du véhicule et la partie de déflection 24. A titre d'exemple, la partie de déflection 24 prolonge la partie intermédiaire 22 de sorte qu'un angle de 100° soit formé entre ces deux parties. Un tel angle α permet d'orienter l'expansion du coussin gonflable 8 de manière à ce que ce coussin 8 se place entre le côté de caisse 5et le passager du véhicule, sans interférer avec la poignée de virage 2 située au dessus de la partie de déflection 24.

Un tunnel 26 peut être formé, sans sortir du contexte de l'invention, sensiblement au milieu de cette pièce de support 10, afin de faciliter l'accès à des moyens de soudage aptes à réaliser les points de soudure du pavillon 6 dans des zones situées derrière la pièce de support 10.

Deux déformations locales 28 sont réalisées sur la partie de fixation 12 de cette pièce de support 10. Ces déformations locales 28 forment chacune un bossage orienté de sorte que la première face extérieure 14 de la paroi formant la partie de fixation 12 est creusée, la face opposée de cette paroi présentant alors des protubérances sur lesquelles la poignée de virage 2 vient en appui. A cet effet, ces protubérances présentent une surface d'accueil 29 sensiblement plane apte à recevoir en appui une extrémité de la poignée de virage 2, et ces surfaces d'accueil 29 présentent chacune un orifice 30 de sorte que des premiers moyens de fixation non représentés et logés à l'intérieur de chaque bossage peuvent coopérer avec des seconds moyens de fixation complémentaires, non représentés et solidaires de la poignée de virage 2. Afin de permettre l'accostage et la fixation de la poignée 2 sur la pièce de support 10, les deux déformations locales 28 sont espacés longitudinalement d'une distance déterminée et correspondante à la distance séparant chaque extrémité de la poignée de virage 2. Il sera compris que selon la forme de la poignée de virage 2, le nombre de déformations locales 28 réalisées sur la partie de fixation 12 peut varier, au moins une déformation locale 28 devant être présente pour permettre la fixation de la poignée 2 selon l'invention.

L'utilisation d'une pièce de renfort 10 selon l'invention, qui intègre les déformations locales 28 aptes à recevoir et à fixer une poignée de virage 2, permet de ne pas générer de variations d'épaisseur dans les éléments de structure latéraux 4 du véhicule, le dessin plus homogène de ces pièces permettant une amélioration de la tenue en choc du véhicule. La réalisation par emboutissage des doublures de montant de baie et des brancards est ainsi simplifiée et permet l'emploi d'acier plus résistant. Le choix des épaisseurs des différentes pièces peut ainsi être optimisé.

La partie intermédiaire 22 sensiblement horizontale et la partie de déflection 24 forme un moyen déflecteur 21 qui a pour but de diriger l'expansion du coussin gonflable 8, après un choc subi par le véhicule. La dimension horizontale de la partie intermédiaire 22 permet le logement du coussin gonflable 8 entre la pièce de support 10 et l'élément de structure 4, lorsque ce coussin 8 est dans sa position de repos. L'angle α déterminé entre la partie intermédiaire 22 et la partie de déflection 24 permet de diriger l'expansion dans la direction souhaitée. Il sera compris qu'un angle α compris entre 90° et 135° permet tout à la fois d'empêcher le coussin 8 d'éjecter la poignée de virage 2 lorsqu'il se gonfle après un choc, et de garantir une position du coussin 8 gonflé entre le passager et la porte ou la vitre.

Selon un mode de réalisation particulier de l'invention représenté à la figure 3, le moyen déflecteur 21 peut être formé uniquement par la partie intermédiaire 22 sensiblement horizontale. Cette partie intermédiaire 22 présente alors une extrémité libre 23, et le rôle du moyen déflecteur 21 est alors d'empêcher l'éjection de la poignée de virage 2 lors de l'expansion du coussin 8, l'orientation de l'expansion du coussin 8 étant alors assurée par des moyens propres au coussin gonflable 8. La valeur de la dimension horizontale de la partie intermédiaire 22 permet toujours le logement du coussin gonflable 8, dans une configuration semblable à celle décrite ci-dessus et représentée à titre d'exemple à la figure 2.

## Revendications

1. Dispositif de fixation (1) d'une poignée de virage (2) pour véhicule automobile, dans lequel une poignée de virage (2) est fixée par au moins un point d'attache à un élément de structure (4) du véhicule, le dispositif comprenant une pièce de support (10) fixée sur cet élément de structure (4), une extrémité de cette pièce de support (10) formant un moyen déflecteur (21),
**caractérisé en ce que** sur la pièce de support (10) est formée au moins une déformation locale (28) apte à permettre la fixation de la poignée de virage (2).

2. Dispositif selon la revendication 1, **caractérisé en ce que** la pièce de support (10) comprend une partie de fixation (12) sensiblement verticale sur laquelle sont formées deux déformations locales (28), le moyen déflecteur (21) prolongeant l'extrémité inférieure (20) de la partie de fixation (12).

3. Dispositif selon la revendication 2, **caractérisé en ce que** le moyen déflecteur (21) est formé d'une partie intermédiaire (22) sensiblement horizontale qui prolonge sensiblement perpendiculairement l'extrémité inférieure (10) de la partie de fixation (12).

4. Dispositif selon la revendication 3, **caractérisé en ce que** le moyen déflecteur (21) est formé en outre d'une partie de déflection (24) qui prolonge la partie intermédiaire (22) à l'opposé de la partie de fixation (12).

5. Dispositif selon la revendication 4, **caractérisé en ce que** la partie de déflection (24) forme avec la partie intermédiaire (22) un angle ([alpha]) compris entre 90[deg.] et 135[deg.].

6. Dispositif selon la revendication précédente, **caractérisé en ce que** les dimensions du moyen déflecteur (21) permettent le logement d'un coussin gonflable (8) de sécurité monté sur l'élément de structure (4).

7. Véhicule automobile comportant un dispositif de fixation (1) de poignée de virage (2) selon l'une des revendications précédentes, **caractérisé en ce que** l'élément de structure (4) sur lequel est monté le dispositif de fixation (1) est une doublure de montant de baie disposée sensiblement au dessus des places avant du véhicule.

8. Véhicule automobile comportant un dispositif de fixation (1) de poignée de virage (2) selon l'une des revendications précédentes, **caractérisé en ce que** l'élément de structure (4) sur lequel est monté le dispositif de fixation (1) est un brancard disposé sensiblement au dessus des places arrière du véhicule.

## Claims

1. Device for fixing (1) a grab handle (2) for a motor vehicle, in which a grab handle (2) is fixed by at least one attachment point to a structural element (4) of the vehicle, the device comprising a support part (10) fixed to this structural element (4), one end of this support part (10) forming a deflecting means (21),
**characterized in that** on the support part (10) is formed at least one local deformation (28) arranged to allow the fixing of the grab handle (2).

2. Device according to Claim 1, **characterized in that** the support part (10) comprises a generally vertical fixing portion (12) on which are formed two local deformations (28), the deflecting means (21) extending the lower end (20) of the fixing portion (12).

3. Device according to Claim 2, **characterized in that** the deflecting means (21) is made of a generally horizontal intermediate portion (22) which extends generally perpendicularly the lower end (10) of the fixing portion (12).

4. Device according to Claim 3, **characterized in that** the deflecting means (21) is also made of a deflecting portion (24) which extends the intermediate portion (22) on the side opposite the fixing portion (12).

5. Device according to Claim 4, **characterized in that** the deflecting portion (24) makes with the intermediate portion (22) an angle (α) of between 90° and 135°,

6. Device according to the preceding claim, **characterized in that** the measurements of the deflecting means (21) allow the installation of a protective air bag (8) mounted on the structural element (4).

7. Motor vehicle including a device for fixing (1) a grab handle (2) according to one of the preceding claims, **characterized in that** the structural element (4) on which is mounted the fixing device (1) is a windshield pillar inner panel disposed generally above the front seats of the vehicle.

8. Motor vehicle including a device for fixing (1) a grab handle (2) according to one of the preceding claims, **characterized in that** the structural element (4) on which is mounted the fixing device (1) is a side rail disposed generally above the rear seats of the vehicle.

## Patentansprüche

1. Vorrichtung (1) zur Befestigung eines Haltegriffs (2) für ein Kraftfahrzeug, wobei ein Haltegriff (2) durch mindestens einen Befestigungspunkt an einem Strukturelement (4) des Fahrzeugs befestigt wird, wobei die Vorrichtung ein Trägerteil (10) aufweist, das an diesem Strukturelement (4) befestigt ist, wobei ein Ende dieses Trägerteils (10) ein Umlenkmittel (21) bildet,
**dadurch gekennzeichnet, dass** an dem Trägerteil (10) mindestens eine lokale Verformung (28) ausgebildet ist, die die Befestigung des Haltegriffs (2) gestattet.

2. Vorrichtung nach Anspruch 1, **dadurch gekennzeichnet, dass** das Trägerteil (10) einen im Wesentlichen vertikalen Befestigungsteil (12) aufweist, an dem zwei lokale Verformungen (28) ausgebildet sind, wobei das Umlenkmittel (21) das untere Ende (20) des Befestigungsteils (12) verlängert.

3. Vorrichtung nach Anspruch 2, **dadurch gekennzeichnet, dass** das Umlenkmittel (21) aus einem im Wesentlichen horizontalen Zwischenteil (22) gebildet ist, das das im Wesentlichen senkrechte untere Ende (10) des Befestigungsteils (12) verlängert.

4. Vorrichtung nach Anspruch 3, **dadurch gekennzeichnet, dass** das Umlenkmittel (21) des Weiteren aus einem Umlenkteil (24) gebildet wird, das den Zwischenteil (22) gegenüber dem Befestigungsteil (12) verlängert.

5. Vorrichtung nach Anspruch 4, **dadurch gekennzeichnet, dass** der Umlenkteil (24) mit dem Zwischenteil (22) einen Winkel (alpha) bildet, der zwischen 90 Grad und 135 Grad liegt.

6. Vorrichtung nach dem vorhergehenden Anspruch, **dadurch gekennzeichnet, dass** die Abmessungen des Umlenkmittels (21) die Aufnahme eines an dem Strukturelement (4) angebrachten Schutzluftsacks (8) gestatten.

7. Kraftfahrzeug, das eine Vorrichtung (1) zur Befestigung eines Haltegriffs (2) nach einem der vorhergehenden Ansprüche aufweist, **dadurch gekennzeichnet, dass** das Strukturelement (4), an dem die Befestigungsvorrichtung (1) angebracht ist, ein Windschutzscheibenholmeinsatz ist, der im Wesentlichen über den Vordersitzen des Fahrzeugs angeordnet ist.

8. Kraftfahrzeug, das eine Vorrichtung (1) zur Befestigung eines Haltegriffs (2) nach einem der vorhergehenden Ansprüche aufweist, **dadurch gekennzeichnet, dass** das Strukturelement (4), an dem die Befestigungsvorrichtung (1) angebracht ist, ein Seitenträger ist, der im Wesentlichen über den Vordersitzen des Fahrzeugs angeordnet ist.
